Europäisches Patentamt

European Patent Office

Office européen des brevets

(19)

(11) Veröffentlichungsnummer: **0 287 518 B1**

# (12) EUROPÄISCHE PATENTSCHRIFT

(45) Veröffentlichungstag der Patentschrift:
21.08.91 Patentblatt 91/34

(51) Int. Cl.⁵: **B60B 37/08**

(21) Anmeldenummer: **88810238.1**

(22) Anmeldetag: **13.04.88**

(54) **Radsatz für Schienenfahrzeuge.**

(30) Priorität: **13.04.87 CH 1420/87**

(43) Veröffentlichungstag der Anmeldung:
**19.10.88 Patentblatt 88/42**

(45) Bekanntmachung des Hinweises auf die
Patenterteilung:
**21.08.91 Patentblatt 91/34**

(84) Benannte Vertragsstaaten:
**DE FR GB IT**

(56) Entgegenhaltungen:
**DE-A- 2 103 036**
**DE-B- 1 277 294**
**DE-C- 85 958**

(73) Patentinhaber: **Jaus, Rudolf**
**Grüneggstrasse 12**
**CH-6005 Luzern (CH)**

(72) Erfinder: **Jaus, Rudolf**
**Grüneggstrasse 12**
**CH-6005 Luzern (CH)**

(74) Vertreter: **Troesch, Jacques J., Dr. sc. nat. et**
**al**
**Troesch Scheidegger Werner AG**
**Siewerdtstrasse 95**
**CH-8050 Zürich (CH)**

## Beschreibung

Die vorliegende Erfindung betrifft einen Radsatz für Schienenfahrzeuge, bestehend aus einer rohrförmigen Achse und mindestens zwei Rädern.

Radsätze, beinhaltend je ein endständig angeordnetes Rad und eine Radachse, bestehen heute normalerweise ganzheitlich aus Stahlguss. Weiter sind alle Teile voll ausgegossen, d.h. es sind keine hohlräumigen Teile an herkömmlichen Radachsen vorhanden.

Bedingt durch diese Vollgusskonstruktion sind Radsätze schwer, womit einerseits die Rollreibung der Räder auf der Schiene hoch ist und anderseits die zu beschleunigende oder abzubremsende Masse gross ist.

Der Gewichtsanteil von Drehgestellen, bei welchen der Radsatz mindestens 50% des Gewichtes ausmacht, haben bei heutigen Personenwagen oder Lokomotiven einen Gesamtgewichtsanteil von 30% bis 40%; Gewichtseinsparungen an Radsätzen haben also einen wesentlichen Einfluss auf Gewichtseinsparungen des ganzen Schienenfahrzeuges.

Ein weiteres Problem besteht bei heute verwendeten Radsätzen, dass infolge des zum Raddurchmesser verhältnismässig kleinen Querschnittes der Radachse, in Längsrichtung unter dem Schienenfahrzeug senkrecht auf die Achse die Möglichkeit für Zugwind und damit für Turbulenzen im Bereich des Radsatzes besteht, was zu sehr unangenehmen Fahrtwindgeräuschen führt.

In der DE-OS 2103036 wird ein Radsatz beschrieben, in welchem die Achse einen Hohlkern aufweist und die so gebildete Stahlrohrachse aussen mit einer harzgetränkten Faserarmierung umwickelt ist. Diese Armierung verbindet die Achse mit den beiden peripheren Rädern. Der Zweck dieser Armierung besteht im Erzeugen höherer Festigkeit im Uebergangsbereich zwischen Achse, Rad und Nabe und auch um Spannungen zwischen Achse und Rad zu vermeiden. Die oben angeführten Probleme werden aber nur dahingehend gelöst, dass das Gewicht des Radsatzes reduziert wird, ohne jedoch eine wesentliche Vergrösserung im Achsquerschnitt zu erzeugen, wodurch insbesondere weiterhin Probleme in bezug auf Zugwind und Turbulenzen im Bereich des Radsatzes bestehen.

Die Aufgabe der vorliegenden Erfindung ist es, einen Radsatz zu entwickeln, der leichter ist und aerodynamisch günstiger läuft.

Erfindungsgemäss wird dies mit einem Radsatz nach mindestens einem der Ansprüche, wie nach Anspruch 1, gelöst.

Gemäss der Erfindung ist die in den Radnaben gelagerte und drehende Radachse ein Stahl- oder Gussrohr. Damit wird einerseits ein erhöhter Querschnitt der Radachse erhalten und anderseits Gewichtsersparnis erzielt.

Gemäss der Erfindung sind die Räder nicht direkt auf diesem Stahl- oder Gussrohr aufliegend, sondern auf je einem Trägerrohr montiert, welche von beiden Seiten her über das Achsrohr derart geschoben werden, dass die beiden Räder einen Radabstand einnehmen, welcher einer Radabstandnorm entspricht. Die Länge der Trägerrohre wird dabei so gewählt, dass sie in der Mitte der Radachse in ihrer endgültigen Position sich höchstens berühren, wenn der gewünschte Radabstand erreicht ist.

Vorzugsweise werden die Trägerrohre mit der rohrförmigen Achse verfestigt, wobei dies entweder durch Schweissen oder durch Verstiften erfolgt.

Die Trägerrohre sind im weiteren gemäss der Erfindung mit Hüllen ummantelt. Diese Hüllen verlaufen mindestens teilweise im Bereich der Achsmitte zylindrisch um die Trägerrohre herum und gegen die Räder hin kegelförmig auseinanderlaufend. Je eine Hülle wird einerseits am Radkranz befestigt und anderseits je an einem Metallring, welcher in der Achsmitte über einem Trägerrohr fixiert angeordnet ist. Die Hüllen müssen nicht zwingend auf dem Trägerrohr aufliegen, sondern ihr Durchmesser kann je nach den aerodynamischen Erfordernissen so gewählt werden, dass mindestens teilweise ein Hohlraum zwischen der Hülle und dem Trägerrohr entsteht. Ein Hohlraum entsteht mindestens im Bereich des Radkranzes, wo die Hülle kegelförmig auseinanderlaufend verläuft.

Die auf einem Radkranz verlaufende Basismantellinie der kegelförmigen Hülle kann vorzugsweise so ausgebildet sein, dass sie aus einem ausgestülpten Kreisring besteht, welcher entweder auf den Radkranz aufgeklebt, verschweisst oder verschraubt werden kann. Der äussere Rand dieses Ringes oder Kragens darf nie über den Radkranz hinausragen.

Die Hülle kann vorzugsweise entweder aus Kunststoff, wie einem faserverstärkten Reaktionsharz oder nach dem Rotationsprinzip aus einem Monomerguss-Thermoplasten, wie beispielsweise Polyamid, hergestellt werden oder aber aus einem Leichtmetall, wie beispielsweise Aluminium oder einer Legierung davon.

Speziell in dem Fall, wo die Hülle in ihrem zylindrischen Abschnitt nicht auf dem Trägerrohr voll aufliegt, sondern infolge eines wesentlich grösseren Durchmessers als das Trägerrohr ein Hohlraum dazwischenliegend entsteht, ist die Festigkeit der Hülle stark vermindert. Aus diesem Grunde ist in einer bevorzugten Anordnung der Erfindung vorgesehen, dass durch die Hülle mindestens vier Adern zur Verstärkung und Stabilisierung vorgesehen sind, wobei diese Adern am einen Ende durch das Schienenrad hindurch verlaufend fixiert werden und am andern Ende aus der Hülle durch die beiden in der Achsmitte liegenden Metallringe hindurchragen, mindestens teilweise in die gegenüberliegende andere Hülle hinein. Aus diesem Grund muss in dieser bevorzugten Anordnung bereits vor Montage der Hüllen darauf geachtet werden, dass entsprechende Einführvertiefungen in den gegen die Radachsenmitte gerichteten Hüllenenden vorgesehen sind. In diese Vertiefungen werden dann jeweils die von der gegenüberliegenden Hülle durch die beiden Metallringe hindurchtretenden Aderenden beim Zusammenschieben der Trägerrohre mit den darüber liegenden Hüllen bei der Montage der Räder hineingeschoben.

Diese Verstärkungsadern bestehen vorzugsweise aus Metallstäben, wie beispielsweise bei Eisenbetonkonstruktionen verwendet.

Durch diese Verstärkungsadern werden die beiden Hüllenkonstruktionen in der Mitte der Radachse gegeneinander derart verstrebt, dass eine kompakte, nicht mehr gegenseitig verdrehbare Konstruktion entsteht. Diese kompakte Konstruktionsweise erlaubt auch, dass in der Radachsenmitte über die Metallringe und teilweise über die Hüllen eine Metallmanschette angeordnet werden kann, welche beispielsweise mit einem Zahnrad versehen für den Betrieb einer Energiequelle, wie z.B. einer Lichtmaschine, verwendet werden kann.

Vor allem im Nahverkehrsmittelbereich, wo oft enge Kurven für das Kreischen von Radsätzen infolge von Schlupf verantwortlich sind, kann auch in der erfindungsgemässen Anordnung in der Radachsenmitte ein Differential vorgesehen werden. In diesem Fall muss in der Radachsenmitte die Konstruktion mindestens derart unterbrochen werden, dass die Räder in Horizontalebene zueinander nicht vollkommen starr sind.

Die für die erfindungsgemäss beschriebenen Ausführungsvarianten des Radsatzes verwendeten Räder können sowohl herkömmliche Vollgussreifen oder sogenannte Monoblocräder sein, wie auch Speichenräder. Im Fall von Speichenrädern müssen diese mindestens vier Speichen umfassen, und die Festigkeit des Radsatzes muss gewährleistet sein. Speichenräder haben den Vorteil, dass einerseits das Radgewicht vermindert werden kann und anderseits am Radkranz-innenliegende Scheibenbremsen durch ein- und austretende Luft gekühlt werden können.

Der erfindungsgemässe Radsatz wird nun anhand eines in Figuren dargestellten Beispieles beschrieben. Es zeigen dabei

Fig. 1    eine perspektivische Ansicht eines erfindungsgemässen Radsatzes,
Fig. 2    einen Längsquerschnitt durch einen erfindungsgemässen Radsatz, und
Fig. 3    einen Längsschnitt durch einen weiteren, alternativen erfindungsgemässen Radsatz mit einem Differential.

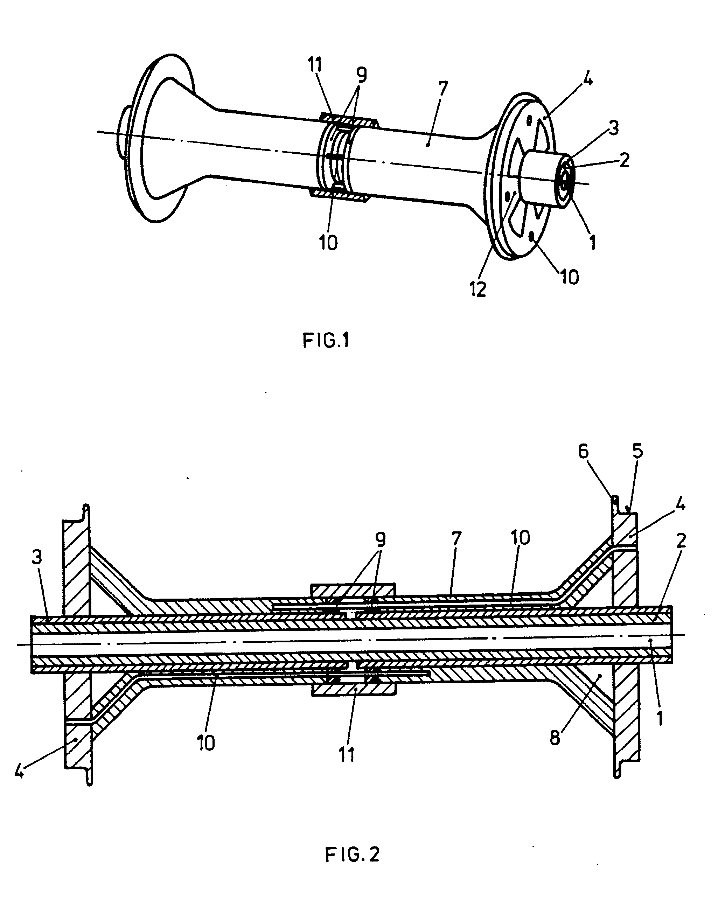

Bezugnehmend auf Fig. 1 zeigt diese eine Hälfte eines erfindungsgemässen Radsatzes in perspektivischer Darstellung.

Der Radsatz besteht zunächst aus einer rohrförmigen Achse 2, welche innenliegend einen Hohlraum 1 besitzt.

Ueber der rohrförmigen Achse aufgeschoben ist ein Trägerrohr 3 angeordnet, welches in seiner Längsausdehnung vom äusseren Ende der rohrförmigen Achse 2 bis höchstens zur Achsmitte verläuft. Auf dem Trägerrohr 3 angeordnet ist das Schienenrad 4, mit der Lauffläche 5 und dem Radkranz 6.

Ueber dem Trägerrohr 3 ist weiter eine vorzugsweise aus Kunststoff oder Leichtmetall hergestellte Hülle 7 angeordnet, die im Achsmittelbereich zylindrisch parallel zum Trägerrohr verläuft und gegen den Radkranz hin kegelförmig auseinander verläuft. Dabei entsteht mindestens im Bereich der kegelförmigen Ausgestaltung der Hülle im Bereich des Radkranzes ein Hohlraum 8. Die Hülle 7 ist einerseits am Radkranz 6 befestigt und anderseits an einem Metallring 9, welcher über dem Trägerrohr 3 bei der Achsmitte angeordnet ist.

Durch die Hülle 7 hindurch verlaufend sind Verstärkungsadern 10 angeordnet, welche einerseits durch das Rad 4 hindurch verlaufend fixiert sind und anderseits durch die beiden in der Radachsenmitte liegenden Metallringe 9 hindurchlaufend in die gegenüberliegende Hülle mindestens teilweise hineinragen.

Ueber die beiden Metallringe 9 und die Hülle 7 im Radachsenmittelpunkt angeordnet ist eine Metallmanschette 11, auf welcher beispielsweise ein Zahnrad zum Betreiben einer Lichtmaschine angeordnet werden kann.

In Fig. 2 ist derselbe erfindungsgemässe Radsatz in einem Querschnitt längs zur Radachse dargestellt.

Beim Aufbau eines Radsatzes wird von einer rohrförmigen Achse 2 ausgegangen. Darüber aufgeschoben werden nun von beiden Seiten die Trägerrohre 3, welche mindestens mit den beiden Schienenrädern 4 bestückt worden sind. Beim Aufschieben der Trägerrohre werden die Schienenräder 4 in einen derartigen Abstand gebracht, dass dieser einer Radstandnorm entspricht. Es ist dabei zu achten, dass die Trägerrohre im fixierten Zustand sich in der Achsmitte höchstens berühren, resp. dass infolge der Wahl eines zu langen Trägerrohres die Radstandnorm nicht erreicht werden kann.

Zur besseren Kühlung der beispielsweise an der Innenseite vom Radkranz 6 angebrachten Scheibenbremsen (nicht gezeigt) ist in Fig. 1 ein Speichenrad mit Speichen 12 vorgesehen.

Das Anbringen einer Hülle 7 wird vorzugsweise vor Aufbringen der Trägerrohre über die rohrförmige Achse ausgeführt.

Im Falle der Verwendung von Kunststoffhüllen 7 können diese entweder nach dem Laminierverfahren oder aber durch Giessen in Formen mit faserverstärkten Reaktionsharzen hergestellt werden. Im Falle des Giessens kann die heute gebräuchliche Art des Druckgiessens verwendet werden. Als Verstärkung können Glasfaser- oder Kohlestoffaser-Gewebe verwendet werden.

Eine weitere Möglichkeit der Herstellung der Kunststoffhüllen 7 besteht darin, dass diese nach dem Rotationsverfahren aus thermoplastischen Kunststoffen hergestellt werden. Insbesondere ist das Monomergussverfahren bekannt zur Herstellung von Polyamid-Konstruktionsteilen.

Die Hüllen 7 können aber auch aus Leichtmetall, wie z.B. Aluminium, oder aus Legierungen davon gefertigt werden.

Die über das Trägerrohr geschobene Hülle 7 wird einerseits am Radkranz 6 befestigt. Zu diesem Zweck wird die Hülle 7 derart gewählt, dass sie beim Radkranz 6 eine Auskragung besitzt, die auf dem Radkranz 6 aufliegt. Diese kreisförmige Auskragung kann nun beim Schienenrad 4 auf dem Radkranz 6 verschraubt oder aufgeklebt werden. Das andere Ende der Hülle 7 wird am Metallring 9 ebenfalls verschraubt oder verklebt, so dass die Hülle 7 fest gegenüber dem Trägerrohr 3 positioniert ist.

Die konstruktive Ausgestaltung der Hülle 7 hängt stark von den zu fahrenden Geschwindigkeiten des Schienenfahrzeuges sowie von der Umgebungskonstruktion im Bereich eines Drehgestelles ab. Die kegelförmige Ausgestaltung im Bereich des Schienenrades 4 bezweckt das Strömen der Luft gegen den Achsmittelpunkt, so dass im Bereich des Schienenrades 4 keine Turbulenzen entstehen. Es sind vor allem die Turbulenzen im Bereich des Schienenrades 4, welche für Fahrtwindgeräusche verantwortlich sind.

Für den Fall, dass die Hülle 7 in keinem Abschnitt auf dem Trägerrohr 3 aufliegt, z.B. um einen möglichst grossen Volumendurchmesser zu erhalten, sind vorzugsweise Verstärkungsadern 10 angeordnet, wie z.B. Eisenstäbe, um die Festigkeit der Hülle 7 zu vergrössern. Diese Verstärkungsadern 10 verlaufen einerseits zur Fixierung durch das Schienenrad 4 und anderseits durch die beiden Metallringe 9 hindurch in die gegenüberliegende Hülle 7, um dadurch eine kompakte Konstruktion im Achsmittelbereich zu erzeugen.

Falls nun die Trägerrohre 3 erst nach Anbringen der Hüllenkonstruktion über die rohrförmige Achse 2 aufgeschoben werden, ist zu beachten, dass die Metallringe 9 wie auch die Hüllen 7 Aussparungen zur Aufnahme der aus der anderen Hülle und dem Metallring heraustretenden Enden der Verstärkungsadern 10 besitzen.

Wenn num die Trägerrohre 3 zusammen mit den Hüllen 7 über die rohrförmige Achse 2 aufgeschoben sind, wird das Trägerrohr 3 gegenüber der rohrförmigen Achse, z.B. durch Verstiften, verfestigt, so dass ein gegenseitiges Drehen unmöglich wird.

In der nun so erhaltenen Konstruktion ist weiter, wie in Fig. 1 und 2 dargestellt, das Anbringen einer rohrförmigen Manschette 11 über den Metallringen 9 im Achsmittelbereich möglich. Dies ist vor allem dann sinnvoll, wenn auf der rohrförmigen Manschette 11 beispielsweise ein Zahnrad angeordnet ist, welches zum Betreiben einer Energiequelle Verwendung finden kann.

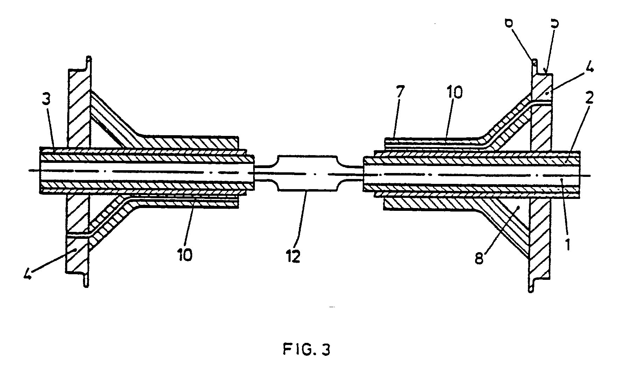

In den Figuren 1 und 2 ist die Achse 2 in ihrer Mitte nicht unterbrochen dargestellt. In der alternativen Ausführung gemäss Fig. 3 ist die Achse 2 in ihrer Mitte unterbrochen und ein konventionelles Differential ist entsprechend angeordnet. Die Trägerrohre 3 sind wiederum über die entgegengesetzten Enden der Achse über den beiden Endbereichen der Achse und innerhalb der Hüllen 7 angeordnet. Gemäss dieser Ausführung muss nicht unbedingt ein Ring 9 vorgesehen sein, da gemäss dieser Ausführung es nicht notwendig ist, jede der beiden Hüllen in einer gegenseitigen, fixierten Position zu halten. Allerdings sind die beiden Hüllen in einer fixierten Position in bezug zum entsprechenden Trägerrohr 3. Analog sind die Verstärkungsadern 10 nicht derart ausgebildet, dass sie über die Achsmitt hinaus in die jeweils andere Hülle hineinragen, da ja die relative Rotation der beiden Achsabschnitte um das Diffenrential 12 wesentlich ist.

Der in den Fig. 1 und 2 dargestellte Radsatz kann vorzugsweise für Güter- oder Personenwagen verwendet werden. Dabei ist unerheblich, ob es sich um zwei-, vier- oder mehrachsige Wagen handelt. Bei Lokomotiven ist die gezeigte Radasatzkonstruktion vor allem bei sogenannten Laufrädern verwendbar.

Der erfindungsgemässe Radsatz kann nicht nur ausschliesslich im Bereich von Eisenbahnschienenfahrzeugen, sondern auch für irgendwelche Schienenfahrzeuge in anderen Bereichen verwendet werden.

## Patentansprüche

1. Radsatz für Schienenfahrzeuge, bestehend aus einer rohrförmigen Achse (2) und mindestens zwei Rädern, gekennzeichnet durch :

— entgegengesetzte Enden an der Achse und von diesen Enden einwärts entsprechende Endbereiche ;
— je ein entsprechendes Trägerrohr (3) für die Aufnahme je eines Rades (4), in jedem Endbereich der Achse um diese herum angeordnet, wobei je ein Trägerrohr von je einem Ende der rohrförmigen Achse über diese derart aufgeschoben positioniert ist, dass der Radabstand einer Radstandnorm entspricht ;
— je eine entsprechende Hülle (7), mittels welchen die Trägerrohre (3) innerhalb des Radabstandes zylinderförmig und gegen den Radsatz hin kegelförmig auseinanderlaufend ummantelt sind, und zwar derart, dass ein Zwischenraum zwischen der Konisch, ausgebildeten Hülle, dem Rad und den Trägerrohren ausgebildet ist, wobei die konische Form derart gewählt ist, um Luftturbulenzen im Bereich der Räder zu reduzieren.

2. Radsatz nach Anspruch 1, dadurch gekennzeichnet, dass die Trägerrohre (3) starr mit der Achse (2) verbunden sind.

3. Radsatz nach den Ansprüchen 1 oder 2, dadurch gekennzeichnet, dass die Hülle (7) eine Kunststoffhülle aus faserverstärktem Reaktionsharz ist.

4. Radsatz nach den Ansprüchen 1 oder 2, dadurch gekennzeichnet, dass die Hülle (7) aus einem verstärkten oder unverstärkten thermoplastischen Kunststoff besteht.

5. Radsatz nach den Ansprüchen 1 oder 2, dadurch gekennzeichnet, dass die Hülle (7) aus einem Leichtmetall oder einer Legierung aus Leichtmetallen besteht.

6. Radsatz nach Anspruch 5, dadurch gekennzeichnet, dass das Leichtmetall Aluminium ist.

7. Radsatz nach den Ansprüchen 1, 2, 3, 4, 5 oder 6, dadurch gekennzeichnet, dass durch die Hülle (7) aderförmige Verstärkungen (10) angeordnet sind.

8. Radsatz nach den Ansprüchen 1, 2, 3, 4, 5, 6 oder 7, dadurch gekennzeichnet, dass diese Adern (10) Eisenstäbe sind.

9. Radsatz nach den Ansprüchen 1, 2, 3, 4, 5, 6, 7 oder 8, dadurch gekennzeichnet, dass in der Achsmitte ein Differential angeordnet ist.

10. Radsatz nach den Ansprüchen 1, 2, 3, 4, 5, 6, 7, 8 oder 9, dadurch gekennzeichnet, dass das Rad (4) ein Strebenrad ist mit mindestens vier Streben (12).

## Claims

1. Wheelset for rail vehicles, consisting of a tubular axle (2) and at least two wheels, characterised by :
— opposite ends on the axle and corresponding end areas inwards from these ends ;
— the fact that each wheel has a corresponding support tube (3) for the insertion piece for a wheel (4) each, which is fitted in the end area of the axle around the insertion piece whereby a support tube from each end of the tubular axle is pushed into position by means of the insertion piece in such a way that the distance between the wheels corresponds to a standard setting ;
— the fact that each has a corresponding cover (7) by means of which the support tubes (3) between the wheels are covered in cylindrical fashion and run in opposite directions towards the wheelset in conical form in such a manner that a hollow space is formed between the cone-shaped cover, wheel and the support tubes whereby the conical form is selected so as to reduce the level of air turbulence in the area of the wheels.

2. Wheelset as set forth in claim 1, characterised by the fact that the support tubes (3) are securely connected to the axle (2).

3. Wheelset as set forth in claims 1 or 2, characterised by the fact that the cover (7) is a plastic cover made from fibre-reinforced reaction resin.

4. Wheelset as set forth in claims 1 or 2, characterised by the fact that the cover (7) consists of a reinforced or non-reinforced thermoplastic plastics.

5. Wheelset as set forth in claims 1 or 2, characterised by the fact that the cover (7) consists of a light metal or an alloy of light metals.

6. Wheelset as set forth in claim 5, characterised by the fact that the light metal is aluminium.

7. Wheelset as set forth in claims 1, 2, 3, 4, 5 or 6, characterised by the fact that rod-shaped reinforcements run through the cover (7).

8. Wheelset as set forth in claims 1, 2, 3, 4, 5, 6 or 7, characterised by the fact that these rods (10) are iron rods

9. Wheelset as set forth in claims 1, 2, 3, 4, 5, 6, 7 or 8, characterised by the fact that a differential is positioned in the centre of the axle.

10. Wheelset as set forth in claims 1, 2, 3, 4, 5, 6, 7, 8 or 9, characterised by the fact that the wheel (4) is a strut frame wheel with at least four struts (12).

## Revendications

1. Train de roues pour véhicules sur rails, comportant un axe de forme tubulaire (2) et au moins deux roues, caractérisé par :

— des extrémités opposées au niveau de l'axe et des zones d'extrémité correspondantes orientées vers l'intérieur à partir de ces extrémités,

— des tubes de support (3) correspondants, respectifs destinés à recevoir chacun une roue (4) et disposés dans chacune des zones d'extrémité de l'axe, tout autour de celui-ci, chaque tube de support étant positionné en étant enfilé à partir d'une extrémité respective de l'axe de forme tubulaire, par dessus celui-ci, de façon que la distance entre roues corresponde à une norme d'écartement de roues ;

— des gaines (7) correspondantes, respectives au moyen desquelles les tubes de support (3) sont enveloppés d'une manière cylindrique à l'intérieur de la distance entre roues et qui vont en s'évasant vers le train de roues suivant une configuration en forme de cône, et ce de telle sorte qu'un espace intermédiaire est défini entre la gaine conçue en forme de cône, la roue et les tubes de support, la forme conique étant choisie de manière à réduire des turbulences d'air dans la zone des roues.

2. Train de roues selon la revendication 1, caractérisé en ce que les tubes de support (3) sont reliés à l'axe (2) d'une manière rigide.

3. Train de roues selon la revendication 1 ou 2, caractérisé en ce que la gaine (7) est une gaine en matière synthétique réalisée à partir d'une résine de réaction renforcée de fibres.

4. Train de roues selon la revendication 1 ou 2, caractérisé en ce que la gaine (7) est constituée d'une matière synthétique thermoplastique renforcée ou non.

5. Train de roues selon la revendication 1 ou 2, caractérisé en ce que la gaine (7) est constituée d'un métal léger ou d'un alliage réalisé à partir de métaux légers.

6. Train de roues selon la revendication 5, caractérisé en ce que le métal léger est de l'aluminium.

7. Train de roues selon la revendication 1, 2, 3, 4, 5 ou 6, caractérisé en ce que des renforcements en forme de brins (10) sont disposés à travers la gaine (7).

8. Train de roues selon la revendication 1, 2, 3, 4, 5, 6 ou 7, caractérisé en ce que ces brins (10) sont des tiges en fer.

9. Train de roues selon la revendication 1, 2, 3, 4, 5, 6, 7 ou 8, caractérisé en ce qu'un différentiel est disposé au milieu de l'axe.

10. Train de roues selon la revendication 1, 2, 3, 4, 5, 6, 7, 8 ou 9, caractérisé en ce que la roue (4) est une roue à rayons comportant au moins quatre rayons (12).

FIG.1

FIG. 2

FIG. 3